# EUROPEAN PATENT APPLICATION

(11) **EP 4 700 725 A1**
(43) Date of publication of application: **25.02.2026**
(21) Application number: 24796068.5
(22) Date of filing: 23.04.2024
(51) Int. Cl.: G07C 9/00, B60R 25/24

(54) **DIGITAL KEY SHARING METHOD, SYSTEM, AND TERMINAL**

(30) Priority: 25.04.2023 CN 202310457929
(71) Applicant: Boe Technology Group Co., Ltd., Beijing 100015 (CN); Beijing BOE Technology Development Co., Ltd., Beijing 100176 (CN)
(72) Inventor: SHEN, Hongxiang, Beijing 100176 (CN); ZHAO, Junjie, Beijing 100176 (CN); WU, Xinyin, Beijing 100176 (CN); SU, Jing, Beijing 100176 (CN); ZHANG, Honglei, Beijing 100176 (CN); CHEN, Shaobei, Beijing 100176 (CN); ZHANG, Yangyang, Beijing 100176 (CN); CHU, Xiao, Beijing 100176 (CN)
(74) Representative: Cohausz & Florack
(86) International application number: PCT/CN2024/089371
(87) International publication number: WO 2024/222688

(57) **Abstract**

The present disclosure provides a digital key sharing method, a system, and a terminal, for use in solving the problem of single sharing objects in key sharing scenes by addition of device roles in addition to friend devices and settings based on digital key standards. The method comprises: a second device sends to a third device a key creation request, used for instructing the third device to generate information to be authenticated, wherein the second device has a digital key, and the digital key of the second device is obtained by performing digital key sharing by a first device; the second device receives a key signing request sent by the third device, authenticates the information to be authenticated in the key signing request, and generates key authentication information; the second device sends to the third device a key import request, used for instructing the third device to save the key authentication information in the key import request, wherein the key authentication information is used for determining a digital key of the third device.

## Description

### Cross-Reference to Related Applications

This application claims priority to Chinese Patent Application No. 202310457929.6, filed with the China National Intellectual Property Administration on April 25, 2023 and entitled "Digital Key Sharing Method, System, and Terminal", the entire contents of which are incorporated herein by reference.

### Technical Field

The present disclosure relates to the technical field of vehicle networking, and in particular to a method, system and terminal of digital key sharing.

### Background

In the technological development of smart vehicles, digital keys have become a major trend in the future. Digital keys are usually integrated into mobile devices such as smartphones. Mobile devices establish connections with vehicles through communication technologies such as NFC (Near Field Communication), BLE (Bluetooth Low Energy), and UWB (Ultra Wide Band), and then control the vehicles to perform operations such as unlocking the doors, locking the doors and starting the vehicles. Mobile devices can also share the unlocking and driving permissions of digital keys with relatives and friends.

Existing digital keys include two categories: one is the digital key of Owner Device, and the other is the digital key of Friend Device. The owner device can share its digital key with the friend device, but the friend device cannot share its digital key with other devices. For example, when a friend needs to repair or wash the vehicle, he/she may wish to share the digital key with the service staff, but the friend device cannot share the digital key, resulting in the digital key of the friend device needing to be left at the vehicle repair or wash location and cannot be carried around, affecting the user experience.

### Summary

The present disclosure provides a method, system and terminal of digital key sharing, which solve the problem of single sharing object in key sharing scenarios by adding device roles other than friend devices and setting based on digital key standards.

In a first aspect, embodiments of the present disclosure provide a method of digital key sharing, the method includes the following.

The second device sends a key creation request to the third device, for instructing the third device to generate information to be authenticated. The second device has digital keys, and the digital keys of the second device are obtained from a first device sharing the digital keys with the second device.

The second device receives the key signing request sent by the third device, authenticates the information to be authenticated in the key signing request, and generates key authentication information.

The second device sends a key import request to the third device to instruct the third device to save the key authentication information in the key import request. The key authentication information is used to determine the digital key of the third device.

In a second aspect, embodiments of the present disclosure provide a method of digital key sharing, which is applied to a third device. The method includes the following.

The third device receives the key creation request sent by the second device and generates information to be authenticated. The second device has digital keys, and the digital keys of the second device are obtained from a first device sharing the digital keys with the second device.

The third device sends a key signing request to the second device. The key signing request includes the information to be authenticated, and is used to instruct the second device to authenticate the information to be authenticated in the key signing request and generate key authentication information. The key authentication information is used to determine the digital key of the third device.

The third device receives the key import request sent by the second device, and saves the key authentication information in the key import request.

In a third aspect, embodiments of the present disclosure provide a method of digital key sharing, the method includes the following.

The second device sends a key creation request to the third device. The second device has digital keys, and the digital keys of the second device are obtained from a first device sharing the digital keys with the second device.

The third device generates information to be authenticated according to the key creation request, and sends a key signing request to the second device. The key signing request includes the information to be authenticated.

The second device authenticates the information to be authenticated in the key signing request, generates key authentication information, and sends a key import request to the third device. The key import request includes the key authentication information. The key authentication information is used to determine the digital key of the third device.

The third device stores the key authentication information in the key import request.

In a fourth aspect, embodiments of the present disclosure further provide a terminal. The terminal includes a processor and a memory. The memory is used to store a program executable by the processor. The processor is used to read the program in the memory and perform the following steps.

The terminal sends a key creation request to the third device, for instructing the third device to generate information to be authenticated. The terminal has digital keys, and the digital keys of the terminal are obtained from a first device sharing the digital keys with the terminal.

The terminal receives the key signing request sent by the third device, authenticates the information to be authenticated in the key signing request, and generates key authentication information.

The terminal sends a key import request to the third device to instruct the third device to save the key authentication information in the key import request. The key authentication information is used to determine the digital key of the third device.

In a fifth aspect, embodiments of the present disclosure further provide a terminal. The terminal includes a processor and a memory. The memory is used to store a program executable by the processor. The processor is used to read the program in the memory and perform the following steps.

The terminal receives a key creation request sent by a second device and generates information to be authenticated. The second device has digital keys, and the digital keys of the second device are obtained from a first device sharing the digital keys with the second device.

The terminal sends a key signing request to the second device. The key signing request includes the information to be authenticated, and is used to instruct the second device to authenticate the information to be authenticated in the key signing request and generate key authentication information. The key authentication information is used to determine the digital key of the terminal.

The terminal receives the key import request sent by the second device, and saves the key authentication information in the key import request.

In a sixth aspect, embodiments of the present disclosure provide a system of digital key sharing. The system comprising a second device and a third device.

The second device sends a key creation request to the third device. The second device has digital keys, and the digital keys of the second device are obtained from a first device sharing the digital keys with the second device.

The third device generates information to be authenticated according to the key creation request, and sends a key signing request to the second device. The key signing request includes the information to be authenticated.

The second device authenticates the information to be authenticated in the key signing request, generates key authentication information, and sends a key import request to the third device. The key import request includes the key authentication information. The key authentication information is used to determine the digital key of the third device.

The third device stores the key authentication information in the key import request.

In a seventh aspect, embodiments of the present disclosure further provide a computer storage medium on which a computer program is stored. When the program is executed by a processor, it is used to implement the steps of the method described in the first aspect, the second aspect, or the third aspect above.

These and other aspects of the present disclosure will become more apparent from the following description of the embodiments.

### Brief Description of Drawings

In order to more clearly illustrate the technical solutions in the embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without paying creative labor.
FIG. 1 is a flowchart of a method of digital key sharing according to an embodiment of the present disclosure.
FIG. 2 is a schematic diagram of an allocation method of immobilizer tokens provided in an embodiment of the present disclosure.
FIG. 3 is a schematic diagram of an allocation method of immobilizer tokens provided in an embodiment of the present disclosure.
FIGS. 4A-4B are schematic diagrams of storage space fields for allocating immobilizer tokens provided in an embodiment of the present disclosure.
FIG. 5 is a flow chart of allocating immobilizer tokens and slot identifiers provided by an embodiment of the present disclosure.
FIG. 6 is a schematic diagram of the structure of a digital key of a third device provided in an embodiment of the present disclosure.
FIG. 7 is a flow chart of improving the security of digital key sharing by a sharing password according to an embodiment of the present disclosure.
FIG. 8 is an interactive flow chart of digital key sharing provided by an embodiment of the present disclosure.
FIG. 9 is a flowchart of a method of digital key sharing provided by an embodiment of the present disclosure.
FIG. 10 is a flowchart of a method of digital key sharing provided by an embodiment of the present disclosure.
FIG. 11 is a schematic diagram of a terminal provided in an embodiment of the present disclosure.
FIG. 12 is a schematic diagram of a system for sharing digital keys provided in an embodiment of the present disclosure.

### Detailed Description

In order to make the purpose, technical solutions and advantages of the present disclosure more clear, the present disclosure will be further described in detail below in conjunction with the accompanying drawings. Obviously, the described embodiments are only part of the embodiments of the present disclosure, rather than all the embodiments. Based on the embodiments in the present disclosure, all other embodiments obtained by ordinary technicians in the field without making any creative work shall fall within the scope of protection of the present disclosure.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

The application scenarios described in the embodiments of the present disclosure are intended to more clearly illustrate the technical solutions of the embodiments of the present disclosure, and do not constitute a limitation on the technical solutions provided by the embodiments of the present disclosure. A person of ordinary skill in the art can appreciate that with the emergence of new application scenarios, the technical solutions provided by the embodiments of the present disclosure are also applicable to similar technical problems. In the description of the present disclosure, unless otherwise specified, "plurality" means two or more.

In the technological development of smart vehicles, digital keys have become a major trend in the future, and in-vehicle applications for controlling smart homes are becoming more and more popular. Digital keys, also known as Bluetooth keys or virtual keys, mainly use near-field communication technology (NFC), allowing users to unlock and lock doors of vehicles and start vehicles through smart terminals or wearable smart devices with NFC functions, such as smart watches and bracelets. Users can unlock the vehicle, start the engine, and monitor the number of times the vehicle is started, and can also share the unlocking and driving permissions of the digital key with relatives and friends. In the existing digital key standard (such as the CCC standard), two categories of digital keys are defined: Owner Device and Friend Device. The owner device can share the digital key with a friend device, but the friend device cannot continue to share the digital key with other devices.

The CCC standard also defines a standard process for key sharing. The owner device can share the digital key with a friend device. The sharing process mainly includes the following steps.
(1) The owner device creates a sharing invitation (Sharing Invitation).
(2) The Owner device sends a key creation request (Key Creation Request).
(3) The Friend device sends a key signing request (Key Signing Request).
(4) The Owner device sends a key import request (Key Import Request).

The existing digital key standard defines two categories of devices: Owner device (Device) and Friend device (Device). Owner device can share the digital key with Friend device, but Friend device cannot continue to share the digital key with other people. However, in some scenarios, Friend device also needs to share the digital key with other people's devices. For example, in a vehicle wash scenario, Friend user needs to share the digital key with the vehicle wash staff through Friend device. In a hotel scenario, Friend user needs to share the digital key with the hotel receptionist through Friend device. In a repair shop scenario, Friend user needs to share the digital key with repair personnel through Friend device.

In order to enrich the scenarios of digital key sharing, embodiments of the present disclosure provide a method of digital key sharing, using a second device that has obtained the digital key through sharing to share the digital key to a third device, thereby realizing multi-level sharing of the digital key, and solving the current problem of the singleness of the digital key in sharing, that is, solving the problem that the digital key can only be shared from the owner device to the friend device, and cannot be further shared by the friend device.

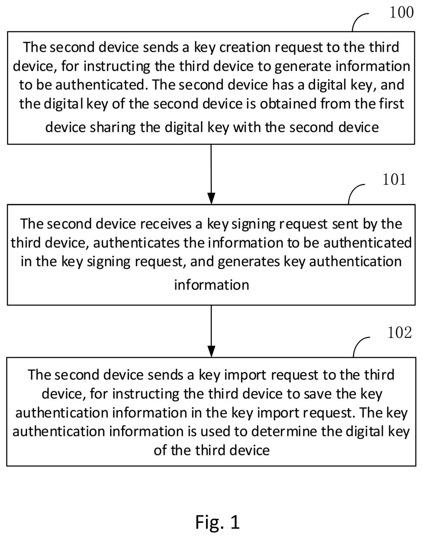

As shown in FIG. 1, the implementation process of a method of digital key sharing provided in an embodiment of the present disclosure is as follows.

Step 100: The second device sends a key creation request to the third device, for instructing the third device to generate information to be authenticated. The second device has a digital key, and the digital key of the second device is obtained from the first device sharing the digital key with the second device.

During implementation, the second device creates a configuration file, carries the configuration file in a key creation request, and sends the key creation request to the third device. The configuration file includes configuration information related to the shared digital key.

Optionally, before sharing the digital key with the third device, the second device needs to create a configuration file related to the digital key. The configuration file includes configuration information related to the shared digital key. The configuration file can be carried in a key creation request and the key creation request is sent to the third device. That is, the second device sends a key creation request carrying the configuration file to the third device, so that the third device generates and signs an endpoint.

In some embodiments, the key creation request includes second authentication information obtained by the second device from the first device. The key creation request is used to instruct the third device to generate the information to be authenticated based on the second authentication information, and third authentication information of the third device.

Optionally, the key creation request in embodiments of the present disclosure includes a configuration file, which includes the second authentication information. The second authentication information includes but is not limited to the certificate chain of the first device, the certificate chain of the second device, and the IMtoken (immobilizer token) allocated by the first device to the second device.

Optionally, the third authentication information in embodiments of the present disclosure includes but is not limited to the certificate chain of the third device. The information to be authenticated in embodiments of the present disclosure includes, but is not limited to, the certificate chain of the first device, the certificate chain of the second device, the certificate chain of the third device, and the IMtoken allocated by the first device to the second device.

During implementation, the second device carries the second authentication information in a key creation request and sends the key creation request to the third device. The third device generates information to be authenticated based on the certificate chain of the first device, the certificate chain of the second device, the IMtoken allocated by the first device to the second device, and the certificate chain of the third device, and sends the information to be authenticated to the second device.

In some embodiments, the second authentication information includes first authentication information of at least one digital key obtained from the first device. The first authentication information includes an immobilizer token and/or a slot identifier. The immobilizer token and the slot identifier are in one-to-one correspondence.

In some embodiments, the second device determines the maximum number of digital keys for sharing based on the number of first authentication information included in the second authentication information.

During implementation, if the number of first authentication information included in the second authentication information of the second device is K, K being an integer greater than or equal to 1, the second device can share the digital key with at most K third devices. One third device obtains one digital key. The first authentication information is used to generate the digital key.

In some embodiments, the key creation request further includes an immobilizer token allocated by the second device to the third device from among the immobilizer tokens included in the first authentication information.

The second device adds the immobilizer token allocated to the third device to the key authentication information, so that the third device determines the digital key according to the immobilizer token.

The second device has immobilizer tokens of different levels, and the immobilizer tokens of the second device are allocated by the first device.

In some embodiments, the level of the immobilizer token in the embodiments is used to determine whether the device that owns the immobilizer token has the function of sharing the immobilizer token with other devices again. The immobilizer tokens of different levels include any one of the following.

The first type includes a first-level immobilizer token and at least one second-level immobilizer token. The first-level immobilizer token is for use by the second device, and the second-level immobilizer token is used for the second device to allocate the second-level immobilizer token to the third device.

During implementation, the immobilizer tokens are divided into two categories, namely, first-level immobilizer tokens and second-level immobilizer tokens. Among multiple allocable immobilizer tokens, a certain number of second-level immobilizer tokens can be selected for secondary sharing. When sharing a digital key with the second device, the first device can allocate a first-level immobilizer token to the second device for use by the second device, and allocate one or more second-level immobilizer tokens to the second device for secondary sharing by the second device. The first device can also determine whether the second device has the secondary sharing function by whether to allocate the second device a second-level immobilizer token.

In some embodiments, when a second device allocates the second-level immobilizer token to a third device, other second devices cannot allocate the allocated second-level immobilizer token to other third devices again.

In some embodiments, if the second device only has one level of immobilizer token, the second device cannot allocate its own immobilizer token to the third device.

In implementation, when the first device allocates a first-level immobilizer token to the second device and does not allocate a second-level immobilizer token to the second device, the second device cannot share the immobilizer token, and further cannot share the digital key.

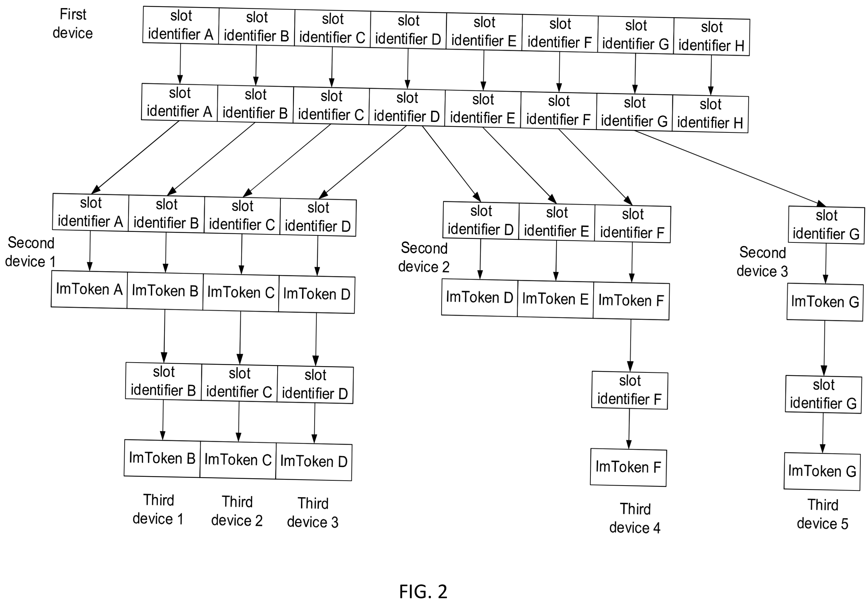

As shown in FIG. 2, embodiments of the present disclosure provide a schematic diagram of an allocation method of immobilizer tokens. In the figure, ImTok represents ImToken, Owner represents the first device, Friend represents the second device, and Other represents the third device. Among the 7 immobilizer tokens ImToken that can be allocated, a certain number (such as 4) are selected as second-level ImTokens that can be shared twice. When the first device shares with the second device, one first-level ImToken can be shared with the second device for its use, and multiple second-level ImTokens can be shared with the second device for its secondary sharing. For example, the first device allocates one first-level ImTokA and three second-level ImTok B, ImTok C, and ImTok D to the second device 1, and the second device 1 allocates ImTok B, ImTok C, and ImTok D to the third device 1, the third device 2, and the third device 3, respectively. It should be noted that when the first device allocates ImToken to the second device, one way is that it can repeatedly allocate the same ImToken to different second devices. For example, ImTok D can be allocated to the second device 1 and the second device 2, but when the second device 1 allocates ImTok D to the third device 3, the second device 2 can no longer allocate ImTok D to other third devices. Another way is that when the first device allocates ImToken to the second device, it does not repeatedly allocate it, that is, if the first device has already allocated an ImToken to the second device, it can no longer allocate the ImToken to other second devices. For example, if the first device allocates ImTok D to the second device 1, the first device no longer allocates ImTok D to other second devices, such as no longer allocates ImTok D to the second device 2.

In implementation, the first device may also determine whether the second device has the secondary sharing function by determining whether a level of ImToken is allocated to the second device. For example, the first device only allocates one ImTok G to the second device 3. Regardless of whether ImTok G belongs to second-level or first-level, the second device 3 does not have the permission to allocate ImToken again. In addition, when the second device 1 shares ImToken D with the third device 3, the second device 2 cannot share ImToken D with the third device 3. It should be noted that each ImToken in the embodiments corresponds to a Slot Identifier.

The second type in embodiments of the present disclosure includes immobilizer tokens of different levels. The immobilizer tokens of different levels include at least one first-level immobilizer token and at least one second-level immobilizer token. One first-level immobilizer token corresponds to one second-level immobilizer token. Different first-level immobilizer tokens correspond to different second-level immobilizer tokens. The first-level immobilizer token is for use by the second device, and the second-level immobilizer token is used for the second device to allocate the second-level immobilizer token to the third device.

During implementation, immobilizer tokens are divided into two categories, namely, first-level immobilizer tokens and second-level immobilizer tokens. Among multiple allocable immobilizer tokens, one first-level immobilizer token can only be paired with one second-level immobilizer token, so that for each second device, secondary sharing can be performed only once. The second-level immobilizer tokens shared by different second devices are different, which will not cause sharing conflicts.

In some embodiments, when a second device allocates a second-level immobilizer token to a third device, other second devices cannot allocate the second-level immobilizer token to other third devices again.

In some embodiments, if the second device only includes one level of immobilizer token, the second device cannot allocate its own immobilizer token to the third device.

In implementation, when the first device allocates a second-level immobilizer token to the second device, the second device cannot share the digital key. In implementation, the first device may only share the second-level immobilizer token with the second device, and the second device does not have the permission to share the digital key again.

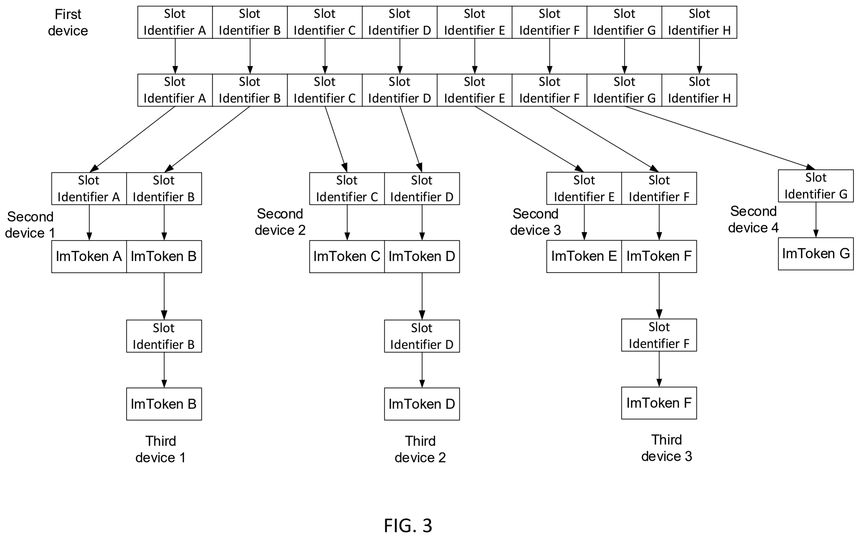

As shown in FIG. 3, embodiments of the present disclosure provide a schematic diagram of an allocation method of immobilizer tokens. The immobilizer tokens ImToken are divided into a plurality of first-level ImTokens and a plurality of second-level ImTokens. However, one first-level ImToken can only be paired with one second-level ImToken, so that for each second device, secondary sharing can be performed only once, and the second-level ImTokens shared by different second devices are different, which will not cause sharing conflicts. For example, the first device allocates a first-level ImTok A and a second-level ImTok B to the second device 1, and the second device 1 allocates ImTok B to the third device 1. In addtion, the first device can only share one level of ImToken with the second device, and the second device has no permission to share it again. For example, the first device allocates one ImTok G to the second device 4, and the second device 4 has no permission to allocate the ImTok G to the third device. It should be noted that each ImToken in the embodiments corresponds to a Slot Identifier.

In some embodiments, the different levels of immobilizer tokens contained in the second device are stored in different fields. The different fields include a first field and a second field.

The second device determines the immobilizer token to be allocated to the third device from the immobilizer tokens stored in the second field.

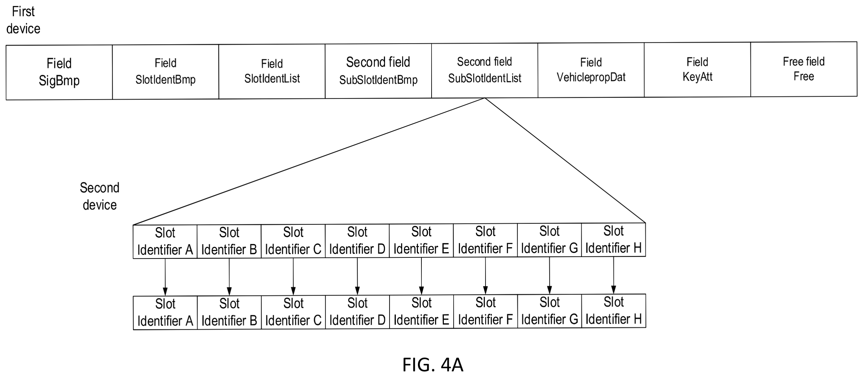

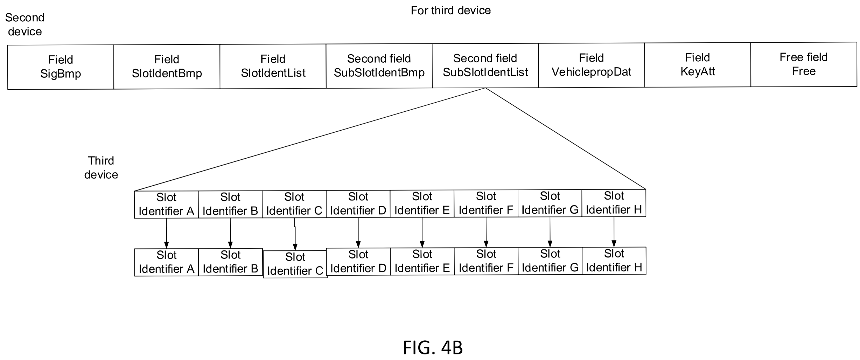

As shown in FIGS. 4A and 4B, embodiments of the present disclosure provide schematic diagrams of storage space fields for allocating immobilizer tokens. The storage space in the embodiments includes a private mailbox and an authentication mailbox. New fields can be added to the private mailbox, such as adding second fields SubSlotldentBmp and SubSlotldentList for indicating and storing second-level ImToken respectively. The first device can allocate second-level ImTokens in the second field during the process of sharing with the second device, and the second device can select a second-level ImToken from the second field for allocation when sharing the digital key (immobilizer token) with the third device.

During implementation, the second device receives immobilizer tokens of different levels allocated by the first device, and determines the immobilizer token to be allocated to the third device and the slot identifier corresponding to the to-be-allocated immobilizer token from the immobilizer tokens of different levels. The slot identifier is used to locally identify the password used. The immobilizer token is used to enable the vehicle engine to authenticate the shared digital key based on the immobilizer token. The vehicle engine can authenticate the digital key of the third device through the immobilizer token allocated by the second device to the third device and the slot identifier corresponding to the allocated immobilizer token. The immobilizer token can be used to start the vehicle engine.

In some embodiments, the key creation request further includes a password parameter, and the password parameter is used for the third device to generate a sharing password.

The key signing request also includes the sharing password, which is used for the second device to authenticate the sharing password of the third device. If the authentication is successful and key authentication information is generated after authenticating the information to be authenticated in the key signing request, a key import request is sent to the third device.

In some embodiments, in order to increase security, password parameters required for generating a sharing password may also be added to the configuration file. The password parameters in embodiments of the present disclosure include but are not limited to any one or more of the following.

Long term shared secret (long_term_shared_secret).
sharing_password_length (sharing_password_length).
sharing_password_seed (sharing_password_seed).

Optionally, a shared_key_seed may be included in the attestation package of the digital key structure.

In implementation, generating a sharing password depends on three inputs as follows.
(1) Long-term shared secret (long_term_shared_secret).
(2) sharing_password_length (sharing_password_length).
(3) sharing_password_seed (sharing_password_seed).

The sharing password can be calculated by the vehicle and the first device (such as the owner device) respectively according to the sharing_password_seed in the digital key of the second device. If the sharing passwords calculated by the vehicle and the first device are consistent, it means that the sharing password is valid.

In the current solution, since the second device does not have the information of long_term_shared_secret and sharing_password_length, when the second device shares the digital key with the third device, the sharing password cannot be calculated from the second device and still needs to be calculated from the first device, which is a cumbersome process. Therefore, in the process of the first device sharing the digital key with the second device, embodiments of the present disclosure add the following information to the endpoint configuration file (endpoint_configure) in the key creation request sent to the second device.
(1) endpoint_configuration.sharingSecret=long_term_shared_secret.
(2) endpoint_configuration.sharingLength=sharing_password_length.
(3) endpoint_configuration.sharingSeed=sharing_password_seed.

Optionally, the second authentication information also includes an authorized public key. The third device uses the authorized public key for authentication. After the authentication is passed, the certificate information of the third device is signed to generate a certificate chain of the third device.

In some embodiments, the certificate chain includes but is not limited to an external certificate, an instance certificate, and an endpoint certificate, etc. The third device uses the authorized public key to authenticate the external certificate, signs the instance certificate with the authenticated external certificate, and signs the endpoint certificate with the signed instance certificate to obtain the certificate chain of the third device.

During implementation, the configuration file includes a key configuration file and an endpoint configuration file. The key configuration file includes an immobilizer token (IMtoken). The key configuration file also includes a permission configuration file of the digital key of the third device. The endpoint configuration file includes the second authentication information (the certificate chain of the first device, the certificate chain of the second device, external certificate information, the immobilizer token allocated to the third device, etc.).

The permission configuration file of the digital key of the third device is as follows:

```
      RestrictedProfiles ::= ENUMERATED
      { full (0), -- full access and drive capabilities
      accessOnly (1), -- only car access, no drive capabilities
      accessAndDriveRestricted (2), -- access and drive with restrictions
      carDelivery (3), -- car delivery profile
      valet (4), -- valet parking key
      vehicleService (5) - service key }
 
```

During implementation, after receiving the configuration file, the third device uses the authorized public key PK in the endpoint configuration file to authenticate the external CA certificate, then uses the external CA certificate to sign the instance CA certificate, and then uses the instance CA certificate to sign the endpoint certificate, and sends the signed certificate chain of the third device to the second device. Optionally, when the third device sends the signed certificate chain to the second device, it also sends the key certificate encrypted by the endpoint private key to the second device.

In implementation, the digital key of the second device is obtained from the first device sharing the digital key. Optionally, the first device may be the owner device or a friend device with digital key sharing permission. The embodiments do not impose too many restrictions on the first device. After the first device shares the digital key with the second device, the second device can continue to share the digital key with the third device, realizing multi-level digital key sharing.

In some embodiments, the key creation request includes permission configuration information of the digital key of the third device. The permission configuration information is used to indicate the scope of control of the digital key on the vehicle in terms of time and/or space. The lower the permission level in the permission configuration information, the smaller the scope of control on the vehicle by the digital key. The digital key of the third device has a lower permission level than that of the second device. The digital key of the second device has a lower permission level than that of the first device.

During implementation, before the second device sends a key creation request to the third device, it is necessary to set the vehicle usage permission in the configuration file and generate permission configuration information. The sharing permissions can be set to be restricted level by level. If the permission level of the second device is the lowest, the digital key can no longer be shared.

In some embodiments, the permission configuration information of the digital key of the third device in the embodiments includes the following.

The permission level of the shared digital key of the third device is lower than the permission level of the digital key of the second device. The permission level of the digital key of the second device is lower than the permission level of the digital key of the first device. The higher the permission level of the digital key, the greater the scope of use of the vehicle.

In some embodiments, if the permission level of the digital key of the second device is the lowest level, the second device does not have permission to share the digital key with the third device.

During implementation, when the first device is the owner device, it has all permissions to use the vehicle. The second device can have all or part of the permissions based on the settings of the owner device or the first device. The settings are determined according to the permission configuration information carried in the key creation request during the process of sharing the digital key. The third device cannot have all permissions, and its permissions can only be smaller than the permissions of the second device. If the vehicle usage permission level of the second device is already the lowest, the second device cannot share the digital key with the third device.

When configuring vehicle usage permissions in the configuration file, a configuration interface can be provided for the user to select the sharing object of the digital key according to the configuration interface (UI interface) of the device/terminal, and to refine the permission configuration parameters of the shared digital key. The specific settings can be based on actual needs, and the embodiments do not impose too many restrictions on this. Optionally, the user can also select the level of the sharing object in the configuration interface, including friend level and other levels. The friend level permission is higher than or equal to other level permission. Different levels correspond to different vehicle usage permission configurations. When the user selects a level of sharing object, the user permission configuration corresponding to that level is automatically matched to generate the corresponding configuration file. Optionally, after selecting the sharing object, the user can also modify the specific vehicle usage permission configuration parameters in the configuration interface to suit actual needs.

In some embodiments, the permission configuration information of the digital key of the third device is determined based on the vehicle usage scenario. The permission configuration information corresponding to different vehicle usage scenarios is different. Different permission configuration information is used to perform different controls on the vehicle.

During implementation, the permission configuration information in the configuration file is used to grant the user vehicle usage permission information. The user is bounded with the device/terminal. For example, in embodiments of the present disclosure, the configuration file sent by the second device to the third device contains the vehicle usage permission information for the user of the third device. Optionally, the permission configuration information configured by users of different levels may be different, and the permission configuration information configured by users of the same level in different vehicle usage scenarios may also be different. The embodiments do not impose too many restrictions on this. The higher the user level, the greater the scope of vehicle usage permission.

In some embodiments, the permission configuration information of the shared digital key in the embodiments includes any one or more of the following.

The first type is the speed of the vehicle.

The second type is the driving range of the vehicle.

The third type is the vehicle's driving trajectory.

The fourth type is the sharing duration of the digital key. The sharing duration indicates the duration that the third device holds the digital key.

The fifth type is the control permission of the digital key on the vehicle.

The sixth type is a recovery condition of the digital key. The recovery condition indicates a condition for determining that the digital key is invalid.

During implementation, by limiting the vehicle's driving speed, driving range, driving trajectory, etc., as well as the sharing duration, control permission and recovery condition of the digital key, the permission configuration scheme for the shared digital key in different vehicle usage scenarios is refined. A digital key recovery mechanism is set up to prevent the abuse of shared digital key.

Optionally, the second device in embodiments of the present disclosure can provide a scene selection interface for sharing users to select a vehicle usage scene. One vehicle usage scene matches a set of permission configuration information. When the user selects a vehicle usage scene, the permission configuration information can be automatically matched for the vehicle usage scene to generate a configuration file. Optionally, after the user selects a vehicle usage scenario, he/she may also configure more detailed permission parameters for the vehicle usage scenario, or may change the automatically matched permission configuration information to better suit the needs of the current usage scenario.

Optionally, in different vehicle usage scenarios, permission configuration information related to the scenarios can be configured as follows.

Scenario 1: The vehicle usage scenario is a valet parking scenario.

In this scenario, the permission configuration information of the digital key of the third device can be configured to include the following.

The speed of the vehicle is less than a first speed threshold and/or a range threshold.

When the vehicle enters the parking space and parks for more than a first time threshold, the driving function of the vehicle is turned off. When the vehicle enters the parking space and parks for more than a second time threshold, the shared digital key is recovered. The second time threshold is greater than the first time threshold.

During implementation, a speed limit may be set in the configuration file, that is, the vehicle's driving speed is set to be less than a first speed threshold. When it is detected that the vehicle's driving speed is greater than or equal to the first speed threshold, the shared digital key shared with the third device is recovered.

The parking detection function can also be used to determine the condition for recovering the vehicle key.

When it is detected that the vehicle enters the parking space and parks, after exceeding the first time threshold, the vehicle driving function is turned off, and after exceeding the second time threshold, the shared digital key is recovered.

In embodiments of the present disclosure, after the shared digital key is recovered, the third device no longer holds the digital key, or the shared digital key held by the third device becomes invalid.

The key recovery condition can also be determined based on the vehicle's driving range.

When the vehicle driving range is greater than or equal to the range threshold, the shared digital key of the third device is recovered. Optionally, after the shared digital key of the third device is recovered, the speed limit function is turned on and the driver is reminded to stop as soon as possible.

Scenario 2: The vehicle usage scenario is a maintenance scenario.

In this scenario, the permission configuration information includes the following.

The sharing duration of the shared digital key is less than a time threshold. When the sharing duration is greater than or equal to the time threshold, the shared digital key is recovered.

During implementation, a time threshold related to the maintenance scenario can be set. When the sharing duration of the shared digital key exceeds or equals the time threshold, the shared digital key of the third device is recovered, and the user of the third device no longer has the permission to use the vehicle. The sharing duration is used to indicate the time period during which the third device holds the shared digital key and the shared digital key is valid.

Scenario 3: The vehicle usage scenario is a vehicle wash scenario.

In this scenario, the permission configuration information includes the following.

When the vehicle's driving speed is less than the second speed threshold, the vehicle's display screen is turned off and the vehicle's rearview mirror is kept open. During implementation, a speed limit can be set in the configuration file, and the vehicle wash mode is entered. In the vehicle wash mode, the vehicle's display screen is automatically turned off, and the rearview mirror is not automatically retracted, that is, the vehicle rearview mirror is kept open.

The digital key recovery condition is determined based on the vehicle's driving range.

When the driving speed of the vehicle is greater than or equal to the second speed threshold, the shared digital key is recovered. Optionally, after the shared digital key is recovered, the speed limit function can be turned on and the driver can be reminded to stop the vehicle as soon as possible.

Scenario 4: The vehicle usage scenario is a refueling scenario.

In this scenario, the permission configuration information includes the following.

When the driving speed of the vehicle is less than a third speed threshold, the vehicle is turned off and the refueling port or the charging port is opened. During implementation, a speed limit can be set in the configuration file, and the refueling mode is entered. In the refueling mode, the vehicle is automatically turned off and the refueling port or the charging port is opened.

The digital key recovery condition is determined based on the vehicle's driving range.

When the driving speed of the vehicle is greater than or equal to the third speed threshold, the shared digital key is recovered. Optionally, after the shared digital key is recovered, the speed limit function can be turned on and the driver can be reminded to stop the vehicle as soon as possible.

Scenario 5: The vehicle usage scenario is a valet vehicle pickup or return scenario.

In this scenario, the permission configuration information includes the following.

The degree to which the vehicle's driving trajectory deviates from the preset trajectory is less than a trajectory threshold. When the degree to which the vehicle's driving trajectory deviates from the preset trajectory is greater than or equal to the trajectory threshold, the shared digital key is recovered.

During implementation, the vehicle's driving trajectory can be monitored in real time, and a reminder can be given when the driving trajectory deviates from the preset trajectory currently running in the navigation. If the degree of deviation from the preset trajectory is greater than or equal to the trajectory threshold, the shared digital key is recovered.

Scenario 6: The vehicle usage scenario is to pick up or put down items on behalf of customers.

In this scenario, the permission configuration information includes the following.

The shared digital key only has the permission to open the vehicle door or the trunk. During implementation, the user of the third device only has the permission to open the trunk/door and cannot start the vehicle.

When a door or trunk is opened and then closed once, or an item is detected to be taken away from the vehicle or placed in the vehicle, the shared digital key is recovered.

Step 101: The second device receives a key signing request sent by the third device, authenticates the information to be authenticated in the key signing request, and generates key authentication information.

Optionally, after the third device sends the information to be authenticated to the second device, the second device can perform authentication. After the authentication is passed, the first device can continue to perform authentication again, thereby improving the security of the shared digital key.

In some embodiments, the third device may also carry a key certificate encrypted by the endpoint private key of the third device in the key signing request.

In some embodiments, in order to improve the security of digital key re-sharing, additional trust endorsement information may be added when the third device generates a device certificate in the embodiments. The second device and/or the first device is/are used for authentication.

In some embodiments, the key signing request sent by the third device further includes trust endorsement information. The trust endorsement information is used to provide the third device with a valid basis for using the digital key.

The second device and/or the first device confirm(s) the trust endorsement information, and determine(s) whether the digital key of the third device is valid according to the confirmation result.

Optionally, the third device may add the trust endorsement information to the information to be authenticated to generate new information to be authenticated.

In some embodiments, the trust endorsement information in the key signing request is confirmed by any one or more of the following methods.

Method a: When generating a key import request, the second device confirms the trust endorsement information in the key signing request.

Method b: During the process of registering the digital key of the third device with the vehicle server, when the first device receives a key confirmation request sent by the vehicle server, the first device confirms the trust endorsement information in the key confirmation request.

In some embodiments, the trust endorsement information includes any one or more of the following.
(1) Contract information.

Optionally, using the contract as a trust endorsement, the third device adds contract information to the information to be authenticated, such as a maintenance contract, including compensation clauses for vehicles used for non-maintenance purposes, etc.

The contract information may also be authenticated when the second device generates a key import request (Generate Import Request). The authentication process can be automatically performed. Alternatively, a user interaction interface may be generated, and the authentication is passed after review and confirmation by the second device or the first device.

(2) Server authentication information obtained by authenticating the third authentication information of the third device through a trusted server.

During implementation, the third authentication information including the certificate chain of the third device is generated on the third device. The certificate chain of the third device is sent to a trusted server (such as a repair shop or hotel). The trusted server signs and returns the certificate chain of the third device to the third device. The third device sends the certificate chain signed by the trusted server to the second device. The second device authenticates the certificate chain and generates a key import request.

(3) Pre-signed information of the first device.

During implementation, the third device adds the pre-signed information of the first device to the information to be authenticated (the pre-trust endorsement of the first device - such as a hotel or vehicle wash shop where the first device has a membership card). When the second device generates a key import request, the pre-signed information of the first device is authenticated.

Optionally, the generated trust endorsement information may be authenticated by the second device when generating a key import request, or may be authenticated by the first device, or may be dually authenticated by the second device and the first device (i.e., the first device authenticates again after the second device authenticates).

In some embodiments, the first device authenticates the information to be authenticated and/or the trust endorsement information of the third device through the following operations.

After the third device registers the digital key in the vehicle server, the vehicle server sends an authentication request message to the first device. The authentication request message includes the information to be authenticated.

The first device authenticates the information to be authenticated in the authentication request message. When the authentication is successful, the first device sends an authentication success response message to the vehicle server, so that the third device and the vehicle are connected and the vehicle is controlled by the third device using a digital key.

It should be noted that the information to be authenticated in embodiments of the present disclosure may include trust endorsement information or may not include trust endorsement information. When the information to be authenticated does not include the trust endorsement information, the second device and/or the first device authenticates the information to be authenticated. When the information to be authenticated contains trust endorsement information, one way is that the second device authenticates the information to be authenticated except the trust endorsement information, and the first device authenticates the trust endorsement information; another way is that the second device authenticates the information to be authenticated except the trust endorsement information, and the first device authenticates all the information to be authenticated; and yet another way is that the second device authenticates the information to be authenticated, and the first device continues to authenticate the information to be authenticated.

Optionally, when authenticating the trust endorsement information, the first device may confirm the trust endorsement information in a check key request (checkKey request) sent by the vehicle server to the first device server after the digital key of the third device is generated. During implementation, after the third device obtains the digital key, it registers the digital key with the third device server. The third device server sends the digital key tracking record to the vehicle server. The vehicle server sends a key check request to the first device server. The first device server forwards the key check request to the first device. The first device authenticates and confirms the trust endorsement information carried in the key check request. The first device server receives the confirmation of the first device.

In some embodiments, after the third device registers the shared digital key on the vehicle server, the vehicle server determines the total number of digital keys currently allocated to the third device. The vehicle server determines whether the shared digital key is valid based on the total number.

During implementation, the third device server sends the digital key tracking record to the vehicle server. The vehicle server can determine the total number of digital keys currently allocated to the third device. If the total number of digital keys allocated to the third device is greater than the quantity threshold (such as 1), a register key response (error) (registerKeyResponse(Error)) is sent to the third device server, thereby invalidating the digital key allocated to the third device.

Step 102: The second device sends a key import request to the third device, for instructing the third device to save the key authentication information in the key import request. The key authentication information is used to determine the digital key of the third device.

During implementation, the second device authenticates the received information to be authenticated, and generates key authentication information after the authentication is successful. The third device determines the digital key based on the key authentication information. The key authentication information includes but is not limited to the permission configuration information of the digital key, the immobilizer token, the slot identifier corresponding to the immobilizer token, etc.

In some embodiments, during the sharing process of the digital key, the key creation request includes multiple tags.

The values of DAh are as follows.
00h is used to indicate that the immobilizer token and slot identifier are obtained from the vehicle through the owner device.
01h is used to indicate online retrieval of immobilizer token and slot identifier.
02h is used to indicate that no immobilizer token is required and the slot identifier is obtained from the vehicle through the owner device.
03h is used to indicate that no immobilizer token is required and the slot identification is retrieved online.

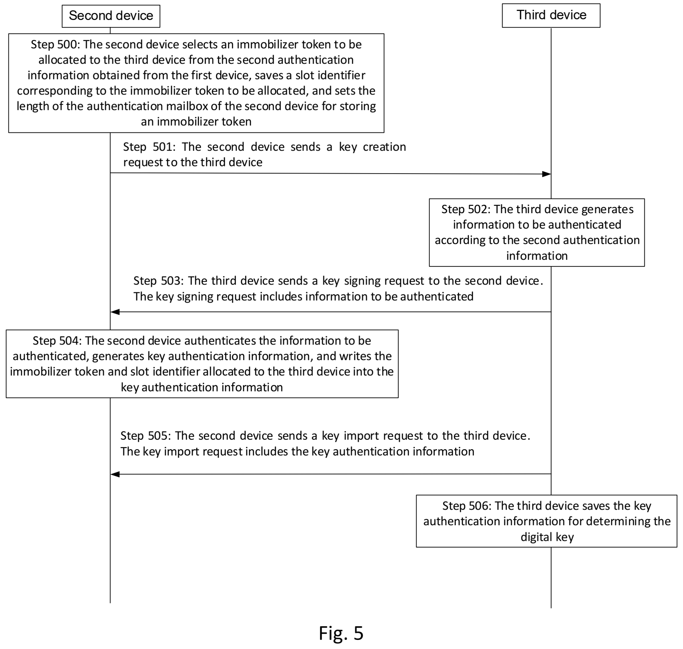

As shown in FIG. 5, embodiments of the present disclosure further provide a process for allocating immobilizer tokens and slot identifiers. The specific implementation process of the process is as follows.

Step 500: The second device selects an immobilizer token to be allocated to the third device from the second authentication information obtained from the first device, saves a slot identifier corresponding to the immobilizer token to be allocated, and sets the length of the authentication mailbox of the second device for storing an immobilizer token.

The storage space in embodiments of the present disclosure includes an authentication mailbox and a private mailbox. Each device has a storage space. The authentication mailbox is used to store the immobilizer token, and the private mailbox is used to store the slot identifier corresponding to the immobilizer token.

Step 501: The second device sends a key creation request to the third device.

The key creation request includes the second authentication information. The second authentication information includes the first authentication information. The first authentication information includes an immobilizer token and a slot identifier.

Step 502: The third device generates information to be authenticated according to the second authentication information.

Step 503: The third device sends a key signing request to the second device. The key signing request includes information to be authenticated.

Step 504: The second device authenticates the information to be authenticated, generates key authentication information, and writes the immobilizer token and slot identifier allocated to the third device into the key authentication information.

Step 505: The second device sends a key import request to the third device. The key import request includes the key authentication information.

Step 506: The third device saves the key authentication information for determining the digital key.

Embodiments of the present disclosure also provide a storage space for a digital key. A private mailbox of the first device is used to store plain text for digital key application retrieval. An authentication mailbox of the first device is used to store cipher text for vehicle authentication. Similarly, the private mailbox of the second device is used to store plain text for digital key application retrieval, and the authentication mailbox of the second device is used to store cipher text for vehicle authentication.

In some embodiments, the digital key of the third device includes first information of the digital key of the first device, second information of the digital key of the second device, and third information of the third device.

The first information is used to authenticate the validity of the digital key of the first device. The second information is used to authenticate the validity of the digital key of the second device. The third information is used to authenticate the validity of the digital key of the third device.

In some embodiments, the first information and the second information are determined according to the information carried in the key creation request. The third information is determined according to the information carried in the key import request.

During implementation, the first information includes information such as a certificate chain of the first device, permission configuration information of the digital key of the first device, and the validity period of the digital key of the first device.

The second information includes information such as the certificate chain of the second device, permission configuration information of the digital key of the second device, and the validity period of the digital key of the second device.

The third information includes information such as the certificate chain of the third device, the permission configuration information of the digital key of the third device, the validity period of the digital key of the third device.

The validity period of the digital key of the third device is within the validity period of the digital key of the second device, and the validity period of the digital key of the second device is within the validity period of the digital key of the first device.

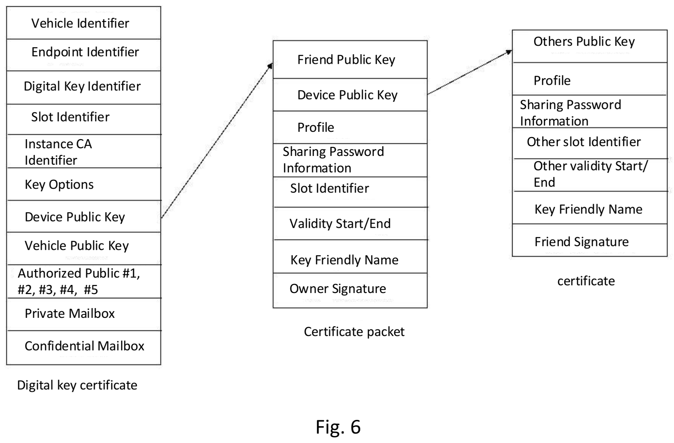

As shown in FIG. 6, a schematic structural diagram of a digital key of a third device provided in an embodiment includes first information of the digital key of the first device, second information of the digital key of the second device, and third information of the third device.

The first information includes vehicle authentication information (Vehicle Identifier), endpoint authentication information (Endpoint Identifier), digital key authentication information (Digital Key Identifier), slot identifier (Slot Identifier), internal CA authentication information (Instance CA Identifier), key options (Key Options), device public key (Device Public Key), vehicle public key (Vehicle Public Key), authorized public keys (Authorized Public) #1, #2, #3, #4, and #5, private mailbox (Private Mailbox), and authentication mailbox (Confidential Mailbox).

The second information includes: the second device public key (Friend Public Key), the device public key (Device Public Key), profile information (Profile), sharing password information (Sharing Password Information), slot identifier (Slot Identifier), validity period (Validity Start/End), key name (Key Friendly Name), and the signature of the first device (Owner Signature). The device public key (Device Public Key) in the first information and the second device public key (Friend Public Key) in the second information are the same.

The third information includes: a third device public key (Others Public Key), profile information (Profile), sharing password information (Sharing Password Information), slot identifier (Other Slot Identifier), validity period (Other Validity Start/End), key name (Key Friendly Name), and the signature of the second device (Friend Signature). The device public key (Device Public Key) in the second information and the third device public key (Others Public Key) in the third information are the same.

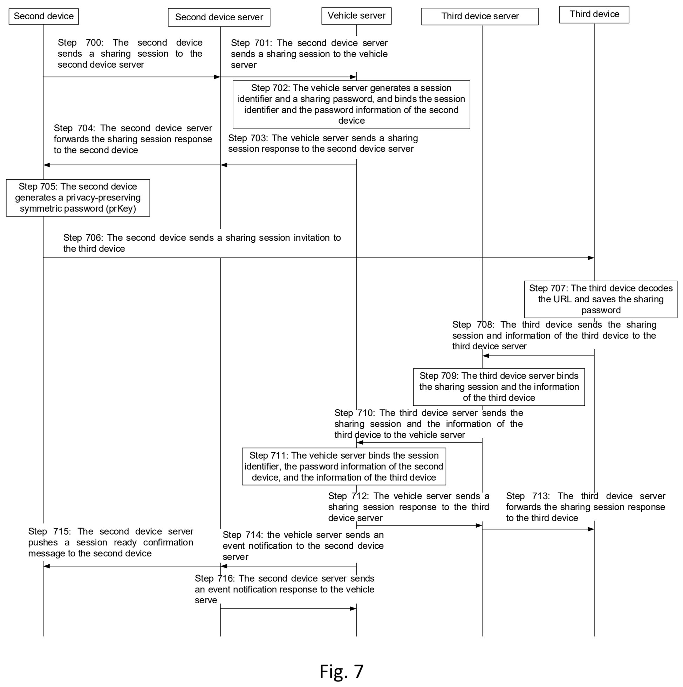

As shown in FIG. 7, embodiments of the present disclosure further provide a process for improving the security of digital key sharing by a sharing password. The digital key sharing process is initiated by the second device. The specific implementation of the process is as follows.

Step 700: The second device sends a sharing session (generateSharingSession) to the second device server.

The sharing session carries password information (friendKeyld) of the second device.

Step 701: The second device server sends a sharing session to the vehicle server.

The sharing session also carries password information of the second device.

Step 702: The vehicle server generates a session identifier and a sharing password, and binds the session identifier and the password information of the second device.

Step 703: The vehicle server sends a sharing session response to the second device server.

The sharing session response carries the sharing session and the sharing password.

Step 704: The second device server forwards the sharing session response to the second device.

Step 705: The second device generates a privacy-preserving symmetric password (prKey).

Step 706: The second device sends a sharing session invitation to the third device.

The sharing session invitation includes but is not limited to carOEMUrI, sessionlD, prKey, sharing password and other data, which is used to be displayed in Url format on WhatsApp, SMS or other channels.

Step 707: The third device decodes the URL and saves the sharing password.

Step 708: The third device sends the sharing session and information of the third device to the third device server.

Step 709: The third device server binds the sharing session and the information of the third device.

Step 710: The third device server sends the sharing session and the information of the third device to the vehicle server.

Step 711: The vehicle server binds the session identifier, the password information of the second device, and the information of the third device.

Step 712: The vehicle server sends a sharing session response to the third device server.

Step 713: The third device server forwards the sharing session response to the third device.

Step 714: the vehicle server sends an event notification to the second device server.

The event notification carries the sharing invitation and the sharing password.

Step 715: The second device server pushes a session ready confirmation message to the second device.

The session ready confirmation message carries the sharing session.

Step 716: The second device server sends an event notification response to the vehicle server.

In the method of digital key sharing in the embodiments of the present disclosure, after the first device shares the digital key with the second device, the second device continues to share the digital key with the third device. During the process of the second device sharing the digital key with the third device, the second device needs to authenticate the device certificate of the third device. After the authentication is passed, a shared digital key is generated, which solves the trust problem of sharing from the second device to the third device. Optionally, in the process of the second device sharing the digital key with the third device, confirmation from the first device or the first device server is also required. Only after confirmation from the first device or the first device server, the digital key shared by the second device to the third device is valid.

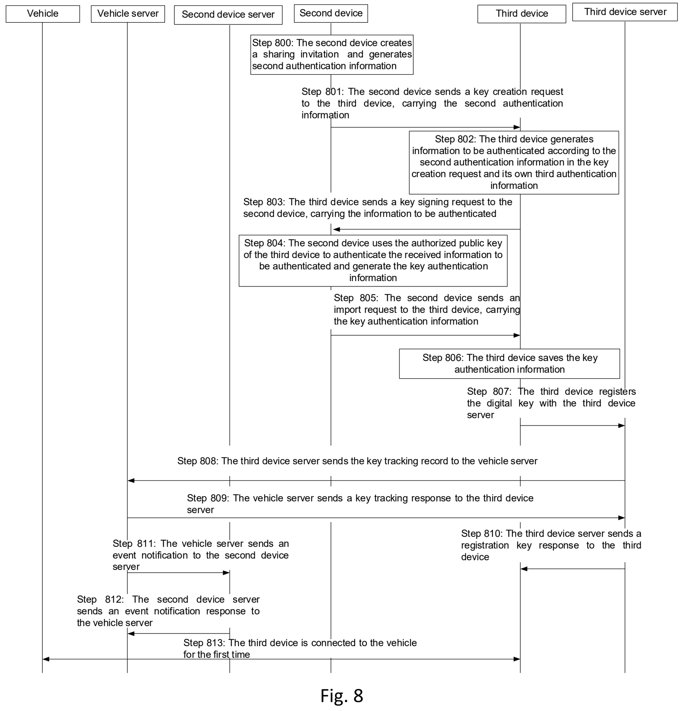

As shown in FIG. 8, embodiments of the present disclosure further provide an interactive process of digital key sharing. The specific implementation of the interactive process is as follows.

Step 800: The second device creates a sharing invitation (Sharing Invitation) and generates second authentication information.

The second authentication information includes the certificate chain of the second device, the certificate chain and IMtoken of the first device, and the permission configuration information of the digital key of the second device.

Step 801: The second device sends a key creation request (Key Creation Request) to the third device, carrying the second authentication information.

Step 802: The third device generates information to be authenticated according to the second authentication information in the key creation request and its own third authentication information.

Step 803: The third device sends a key signing request to the second device, carrying the information to be authenticated.

During implementation, the second authentication information also includes an authorized public key PK. The third device uses the authorized public key PK to authenticate the external CA certificate, and then uses the external CA certificate to sign the instance CA certificate, and then uses the instance CA certificate to sign the endpoint certificate to generate the certificate chain of the third device. The information to be authenticated is generated based on the certificate chain of the first device, the certificate chain of the second device, the certificate chain of the third device, and the IMtoken contained in the second authentication information, and sent to the second device.

Optionally, the third device sends the key certificate encrypted by the endpoint private key to the second device while sending the information to be authenticated to the second device.

Step 804: The second device uses the authorized public key (PK) of the third device to authenticate the received information to be authenticated and generate the key authentication information.

Step 805: The second device sends an import request (Import Request) to the third device, carrying the key authentication information. The key authentication information includes ImToken.

During implementation, the second device uses the PK of the third device to authenticate the endpoint certificate and generate an entitlement data file (entitlement_data field). The entitlement data file includes key_slot (key snapshot), vehicle_identifier (vehicle identifier), and key_configuration (key configuration). Optionally, the entitlement data file also includes sharing_password_seed (sharing_password_seed). The second device exports the immobilizer token Imtoken, performs authorization and generates bytes_attestation (bytes_attestation).

Step 806: The third device saves the key authentication information.

During implementation, the password authentication (key_attestation) is written into the private mailbox of the second device, and the immobilizer token (Imtoken) is written into the encrypted mailbox of the second device.

Step 807: The third device registers the digital key with the third device server.

Step 808: The third device server sends the key tracking record to the vehicle server.

Optionally, in step 808a, the vehicle server sends a key check (checkKey) request to the owner device server.

Step 808b: the owner device server forwards the checkKey request to the owner device for confirmation by the owner device.

Step 809: The vehicle server sends a key tracking response (trackKeyResponse) to the third device server.

Step 810: The third device server sends a registration key response to the third device.

Step 811: The vehicle server sends an event notification to the second device server.

Step 812: The second device server sends an event notification response to the vehicle server.

Step 813: The third device is connected to the vehicle for the first time.

The method of digital key sharing provided in the embodiments of the present disclosure addresses the problems of unclear sharing permissions and lack of further secondary sharing in existing digital key sharing standards, refines the permission configuration schemes for sharing digital keys in different scenarios, and sets up a key recovery mechanism to prevent friend keys from being abused. In addition, by adding the role of a third device and completing a series of standard-based settings, it solves the problem of a single key sharing scenario, and solves a series of problems existing in the digital key sharing of the third device. For example, a trust mechanism is added in the digital key sharing process of the third device. By sharing immobilizer tokens and slot identifiers, the vehicle engine can authenticate the digital key of the third device, thereby improving the security and availability of digital key re-sharing. A second-level immobilizer token ImToken that can be allocated to the third device is defined to achieve secondary sharing of the digital key. A structure of the digital key of the third device is also proposed. By constructing the digital key of the third device, the vehicle can complete the authentication of the digital key of the third device. The sharing password is authenticated by the second device to solve the problem of establishing a connection between the third device and the digital key. The sharing mechanism of the sharing password (Share password) in the digital key sharing process is optimized.

Based on the same inventive concept, embodiments of the present disclosure also provide a method of digital key sharing, which is applied to a third device. The implementation of the method can refer to the implementation of the above method, and the repeated parts will not be repeated.

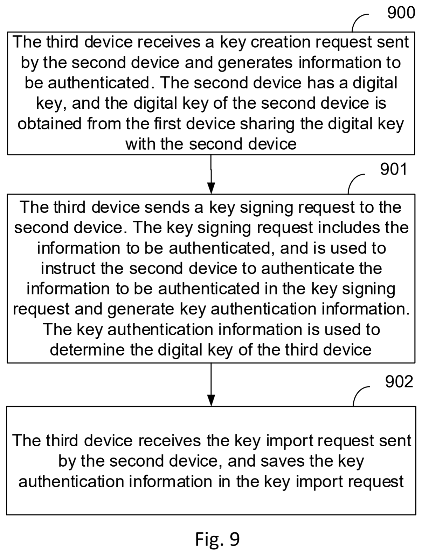

As shown in FIG. 9, the implementation process of the method is as follows.

Step 900: The third device receives a key creation request sent by the second device and generates information to be authenticated. The second device has a digital key, and the digital key of the second device is obtained from the first device sharing the digital key with the second device.

Step 901: The third device sends a key signing request to the second device. The key signing request includes the information to be authenticated, and is used to instruct the second device to authenticate the information to be authenticated in the key signing request and generate key authentication information. The key authentication information is used to determine the digital key of the third device.

Step 902: The third device receives the key import request sent by the second device, and saves the key authentication information in the key import request.

As an optional implementation, the key creation request includes second authentication information obtained by the second device from the first device.

The key creation request is used to instruct the third device to generate the information to be authenticated according to the second authentication information and the third authentication information of the third device.

As an optional implementation, the second authentication information includes first authentication information of at least one digital key obtained from the first device. The first authentication information includes an immobilizer token and/or a slot identifier. The immobilizer token and the slot identifier are in one-to-one correspondence.

As an optional implementation, the key creation request further includes an immobilizer token allocated by the second device to the third device from the immobilizer token included in the first authentication information.

The third device determines the digital key according to the immobilizer token in the key authentication information.

The second device has immobilizer tokens of different levels. The immobilizer tokens of the second device are allocated by the first device.

As an optional implementation, the level of the immobilizer token is used to determine whether the device that owns the immobilizer token has the function of sharing the immobilizer token with other devices again.

The immobilizer tokens of different levels include: a first-level immobilizer token and at least one second-level immobilizer token. The first-level immobilizer token is for use by the second device and the second-level immobilizer token is used for the second device to allocate the second-level immobilizer token to the third device.

Alternatively, the immobilizer tokens of different levels include: at least one first-level immobilizer token and at least one second-level immobilizer token. One first-level immobilizer token corresponds to one second-level immobilizer token. Different first-level immobilizer tokens correspond to different second-level immobilizer tokens. The first-level immobilizer token is used by the second device, and the second-level immobilizer token is used for the second device to allocate the second-level immobilizer token to the third device.

As an optional implementation, the key creation request further includes a password parameter. The password parameter is used by the third device to generate a sharing password.

The key signing request also includes the sharing password, which is used by the second device to authenticate the sharing password of the third device. If the authentication is successful and the key authentication information is generated after the information to be authenticated in the key signing request is authenticated, a key import request is sent to the third device.

As an optional implementation, the key creation request includes permission configuration information of the digital key of the third device. The permission configuration information is used to indicate the control scope of the digital key on the vehicle in terms of time and/or space. The lower the permission level in the permission configuration information, the smaller the control scope of the digital key on the vehicle.

The digital key of the third device has a lower permission level than that of the second device, and the digital key of the second device has a lower permission level than that of the first device.

As an optional implementation, the permission configuration information of the digital key of the third device is determined based on the vehicle usage scenario. Different vehicle usage scenarios correspond to different permission configuration information. Different permission configuration information is used to perform different controls on the vehicle.

As an optional implementation, the permission configuration information includes any one or more of the following:
the speed of the vehicle;
the vehicle's driving range;
the vehicle's driving trajectory;
the sharing duration of the shared digital key, which indicates the duration during which the third device can use the shared digital key;
the control permission of the shared digital key on the vehicle;
the recovery condition of the shared digital key, which indicates the condition for determining that the shared digital key is invalid.

As an optional implementation, if the vehicle usage scenario is a valet parking scenario, the permission configuration information includes that: the vehicle's driving speed is less than a first speed threshold and/or a range threshold. When the vehicle enters the parking space and parks for more than a first time threshold, the vehicle's driving function is turned off. When the vehicle enters the parking space and parks for more than a second time threshold, the shared digital key is recovered. The second time threshold is greater than the first time threshold.

Alternatively, if the vehicle usage scenario is a maintenance scenario, the permission configuration information includes that: the sharing duration of the shared digital key is less than the time threshold. When the sharing duration is greater than or equal to the time threshold, the shared digital key is recovered.

Alternatively, if the vehicle usage scenario is a vehicle wash scenario, the permission configuration information includes: when the vehicle's driving speed is less than a second speed threshold, turning off the vehicle display screen; and when the vehicle's driving speed is greater than or equal to the second speed threshold, recovering the shared digital key.

Alternatively, if the vehicle usage scenario is a refueling scenario, the permission configuration information includes: when the vehicle's driving speed is less than a third speed threshold, turning off the vehicle and opening the refueling port or charging port; and when the vehicle's driving speed is greater than or equal to the third speed threshold, recovering the shared digital key.

Alternatively, if the vehicle usage scenario is a valet vehicle pickup or return scenario, the permission configuration information includes that: the degree to which the vehicle's driving trajectory deviates from the preset trajectory is less than a trajectory threshold. When the degree to which the vehicle's driving trajectory deviates from the preset trajectory is greater than or equal to the trajectory threshold, the shared digital key is recovered.

Alternatively, if the vehicle usage scenario is to a valet item pickup or put down scenario, the permission configuration information includes that: the shared digital key only has the permission to open the door or trunk. When the door or trunk is opened and closed once, or when an item is detected to be taken away from the vehicle or placed in the vehicle, the shared digital key is recovered.

As an optional implementation, the key signing request sent by the third device further includes trust endorsement information. The trust endorsement information is used to provide the third device with a valid basis for using the digital key.

The second device and/or the first device determines whether the digital key of the third device is valid based on the result of confirming the trust endorsement information.

As an optional implementation, the trust endorsement information includes any one or more of the following:
contract information;
server authentication information obtained by authenticating the third authentication information of the third device through a trusted server;
pre-signed information of the first device.

As an optional implementation, the digital key of the third device includes the first information of the digital key of the first device, the second information of the digital key of the second device, and the third information of the third device.

The first information is used to authenticate the validity of the digital key of the first device, the second information is used to authenticate the validity of the digital key of the second device, and the third information is used to authenticate the validity of the digital key of the third device.

As an optional implementation, the first information and the second information are determined according to information carried in the key creation request.

The third information is determined according to the information carried in the key import request.

Based on the same inventive concept, embodiments of the present disclosure also provide a method of digital key sharing. The implementation of the method can refer to the implementation of the above methods, and the repeated parts will not be repeated.

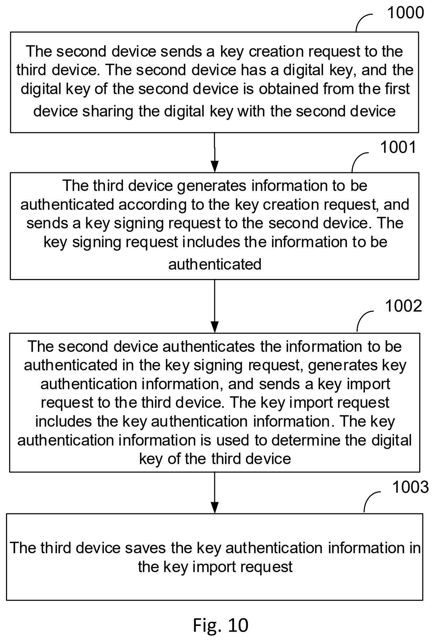

As shown in FIG. 10, the implementation process of this method is as follows.

Step 1000: The second device sends a key creation request to the third device. The second device has a digital key, and the digital key of the second device is obtained from the first device sharing the digital key with the second device.

Step 1001: The third device generates information to be authenticated according to the key creation request, and sends a key signing request to the second device. The key signing request includes the information to be authenticated.

Step 1002: The second device authenticates the information to be authenticated in the key signing request, generates key authentication information, and sends a key import request to the third device. The key import request includes the key authentication information. The key authentication information is used to determine the digital key of the third device.

Step 1003: The third device saves the key authentication information in the key import request.

As an optional implementation, the key creation request includes second authentication information obtained by the second device from the first device.

The key creation request is used to instruct the third device to generate the information to be authenticated according to the second authentication information and the third authentication information of the third device.

As an optional implementation, the second authentication information includes first authentication information of at least one digital key obtained from the first device. The first authentication information includes an immobilizer token and/or a slot identifier. The immobilizer token and the slot identifier are in one-to-one correspondence.

As an optional implementation, the second device determines the maximum number of digital keys for sharing according to the number of first authentication information included in the second authentication information.

As an optional implementation, the key creation request further includes an immobilizer token allocated by the second device to the third device from the immobilizer token included in the first authentication information.

The second device adds the immobilizer token allocated to the third device to the key authentication information, so that the third device determines the digital key according to the immobilizer token.

The second device comprises immobilizer tokens of different levels, and the immobilizer tokens of the second device are allocated by the first device.

As an optional implementation, the level of the immobilizer token is used to determine whether the device that owns the immobilizer token has the function of sharing the immobilizer token with other devices again.

The immobilizer tokens of different levels include: a first-level immobilizer token and at least one second-level immobilizer token. The first-level immobilizer token is for use by the second device, and the second-level immobilizer token is used for the second device to allocate the second-level immobilizer token to the third device.

Alternatively, the immobilizer tokens of different levels include: at least one first-level immobilizer token and at least one second-level immobilizer token. One first-level immobilizer token corresponds to one second-level immobilizer token. Different first-level immobilizer tokens correspond to different second-level immobilizer tokens. The first-level immobilizer token is used by the second device. The second-level immobilizer token is allocated by the second device to the third device for use.

As an optional implementation, when a second device allocates the second-level immobilizer token to a third device, other second devices cannot allocate the second-level immobilizer token to other third devices again.

As an optional implementation, if the second device only includes one level of immobilizer token, the second device cannot allocate its own immobilizer token to the third device.

As an optional implementation, different levels of immobilizer tokens contained in the second device are stored in different fields. The different fields include a first field and a second field.

The second device determines the immobilizer token to be allocated to the third device from the immobilizer token stored in the second field.

As an optional implementation, the key creation request further includes a password parameter. The password parameter is used by the third device to generate a sharing password.

The key signing request also includes the sharing password, which is used by the second device to authenticate the sharing password of the third device. If the authentication is successful and the key authentication information is generated after the information to be authenticated in the key signing request is authenticated, a key import request is sent to the third device.

As an optional implementation, the key creation request includes permission configuration information of the digital key of the third device. The permission configuration information is used to indicate the control scope of the digital key on the vehicle in terms of time and/or space. The lower the permission level in the permission configuration information, the smaller the control scope of the digital key on the vehicle.

The digital key of the third device has a lower permission level than that of the second device, and the digital key of the second device has a lower permission level than that of the first device.

As an optional implementation, the method further includes: if the permission level of the digital key of the second device is the lowest level, the second device does not have the permission to share the digital key with the third device.

As an optional implementation, the permission configuration information of the digital key of the third device is determined based on the vehicle usage scenario. Different vehicle usage scenarios correspond to different permission configuration information. Different permission configuration information is used to perform different controls on the vehicle.

As an optional implementation, the permission configuration information includes any one or more of the following:
the speed of the vehicle;
the vehicle's driving range;
the vehicle's driving trajectory;
the sharing duration of the shared digital key, which indicates the duration during which the third device can use the shared digital key;
the control permission of the shared digital key on the vehicle;
the recovery condition of the shared digital key, which indicates the condition for determining that the shared digital key is invalid.

As an optional implementation, if the vehicle usage scenario is a valet parking scenario, the permission configuration information includes that: the vehicle's driving speed is less than a first speed threshold and/or a range threshold. When the vehicle enters the parking space and parks for more than a first time threshold, the vehicle's driving function is turned off. When the vehicle enters the parking space and parks for more than a second time threshold, the shared digital key is recovered. The second time threshold is greater than the first time threshold.

Alternatively, if the vehicle usage scenario is a maintenance scenario, the permission configuration information includes that: the sharing duration of the shared digital key is less than the time threshold. When the sharing duration is greater than or equal to the time threshold, the shared digital key is recovered.

Alternatively, if the vehicle usage scenario is a vehicle wash scenario, the permission configuration information includes: when the vehicle's driving speed is less than a second speed threshold, turning off the vehicle display screen; and when the vehicle's driving speed is greater than or equal to the second speed threshold, recovering the shared digital key.

Alternatively, if the vehicle usage scenario is a refueling scenario, the permission configuration information includes: when the vehicle's driving speed is less than a third speed threshold, turning off the vehicle and opening the refueling port or charging port; and when the vehicle's driving speed is greater than or equal to the third speed threshold, recovering the shared digital key.

Alternatively, if the vehicle usage scenario is a valet vehicle pickup or return scenario, the permission configuration information includes that: the degree to which the vehicle's driving trajectory deviates from the preset trajectory is less than a trajectory threshold. When the degree to which the vehicle's driving trajectory deviates from the preset trajectory is greater than or equal to the trajectory threshold, the shared digital key is recovered.

Alternatively, if the vehicle usage scenario is a valet item pickup or put down scenario, the permission configuration information includes that: the shared digital key only has the permission to open the door or trunk. When the door or trunk is opened and closed once, or when an item is detected to be taken away from the vehicle or placed in the vehicle, the shared digital key is recovered.

As an optional implementation, the key signing request sent by the third device further includes trust endorsement information. The trust endorsement information is used to provide the third device with a valid basis for using the digital key.

The second device and/or the first device confirm(s) the trust endorsement information, and determine(s) whether the digital key of the third device is valid according to the confirmation result.

As an optional implementation, the second device confirms the trust endorsement information in the key signing request when generating the key import request; and/or, during the process of registering the digital key of the third device with the vehicle server, upon receiving the key confirmation request sent by the vehicle server, the first device confirms the trust endorsement information in the key confirmation request.

As an optional implementation, the trust endorsement information includes any one or more of the following:
contract information;
server authentication information obtained by authenticating the third authentication information of the third device through a trusted server;
pre-signed information of the first device.

As an optional implementation, the digital key of the third device includes the first information of the digital key of the first device, the second information of the digital key of the second device, and the third information of the third device.

The first information is used to authenticate the validity of the digital key of the first device, the second information is used to authenticate the validity of the digital key of the second device, and the third information is used to authenticate the validity of the digital key of the third device.

As an optional implementation, the first information and the second information are determined according to information carried in the key creation request.

The third information is determined according to the information carried in the key import request.

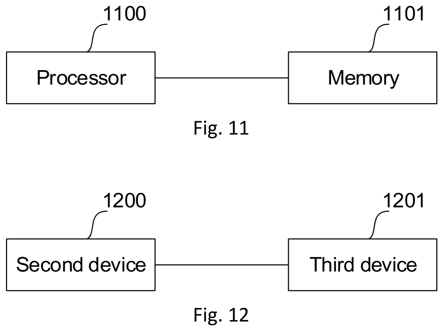

Based on the same inventive concept, embodiments of the present disclosure provide a terminal, which can implement the functions of any digital key sharing method discussed above. Please refer to FIG. 11, the device includes a processor 1100 and a memory 1101. The memory 1101 is used to store program instructions. The processor 1100 is used to call the program instructions stored in the memory 1101, and execute the steps included in any digital key sharing method in the above embodiments according to the obtained program instructions.

The connection medium between the memory 1101 and the processor 1100 is not limited in the embodiments of the present disclosure. For example, the memory 1101 and the processor 1100 are connected via a bus, and the bus can be divided into an address bus, a data bus, a control bus, etc.

The memory 1101 may include a read-only memory (ROM) and a random access memory (RAM), and may also include a non-volatile memory (NVM), such as at least one disk memory. Optionally, the memory may also be at least one storage device located far away from the aforementioned processor.

The processor 1100 may be a general-purpose processor, including a central processing unit, a network processor (NP), etc. The processor 1100 may also be a digital signal processing (DSP), an application-specific integrated circuit, a field programmable gate array or other programmable logic device, a discrete gate or transistor logic device, a discrete hardware component, etc.

Based on the same inventive concept, embodiments of the present disclosure also provide a system for sharing a digital key. Since the system is the system in the methods in the embodiments of the present disclosure, and the principle of solving the problem by the system is similar to that of the method, the implementation of the system can refer to the implementation of the method, and the repeated parts will not be repeated.

As shown in FIG. 12, the system includes a second device 1200 and a third device 1201.

The second device 1200 sends a key creation request to the third device 1201. The second device 1200 has a digital key. The digital key of the second device 1200 is obtained from the first device sharing the digital key with the second device.

The third device 1201 generates information to be authenticated according to the key creation request, and sends a key signing request to the second device 1200. The key signing request includes the information to be authenticated.

The second device 1200 authenticates the information to be authenticated in the key signing request, generates key authentication information, and sends a key import request to the third device 1201. The key import request includes the key authentication information. The key authentication information is used to determine the digital key of the third device 1201.

The third device 1201 saves the key authentication information in the key import request.

Based on the same inventive concept, embodiments of the present disclosure provide a computer storage medium, which includes: a computer program code, which, when executed on a computer, enables the computer to execute any of the digital key sharing methods discussed above. Since the principle of solving the problem by the above-mentioned computer storage medium is similar to the method of sharing a digital key, the implementation of the above-mentioned computer storage medium can refer to the implementation of the method, and the repeated parts will not be repeated.

In the specific implementation process, the computer storage medium may include: Universal Serial Bus Flash Drive (USB), mobile hard disk, read-only memory (ROM), random access memory (RAM), magnetic disk or optical disk, and other storage media that can store program codes.

Based on the same inventive concept, embodiments of the present disclosure further provide a computer program product, which includes: a computer program code, which, when executed on a computer, enables the computer to execute any of the digital key sharing methods discussed above. Since the principle of solving the problem by the above-mentioned computer program product is similar to the method of digital key sharing, the implementation of the above-mentioned computer program product can refer to the implementation of the method, and the repeated parts will not be repeated.

A computer program product may take the form of any combination of one or more computer readable medium. The readable medium may be a readable signal medium or a readable storage medium. The readable storage medium may be, for example but not limited to, an electronic, magnetic, optical, electromagnetic, infrared, or semiconductor system, apparatus, or device, or any combination of the above. More specific examples of readable storage media (a non-exhaustive list) include: an electrical connection having one or more conductors, a portable disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage and optical storage, etc.) containing computer-usable program codes.

The present disclosure is described with reference to flowcharts and/or block diagrams of methods, apparatus (systems), and computer program products according to embodiments of the present disclosure. It should be understood that each process and/or block in the flowchart and/or block diagram, and a combination of the processes and/or blocks in the flowchart and/or block diagram can be implemented by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce a device for implementing the functions specified in one or more processes in the flowchart and/or one or more blocks in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A method of digital key sharing, comprising:
sending, by a second device, a key creation request to a third device, for instructing the third device to generate information to be authenticated, wherein the second device has digital keys, and the digital keys of the second device are obtained from a first device sharing the digital keys with the second device;
receiving, by the second device, a key signing request sent by the third device, authenticating, by the second device, the information to be authenticated in the key signing request, and generating key authentication information;
sending, by the second device, a key import request to the third device, for instructing the third device to save the key authentication information in the key import request, wherein the key authentication information is used to determine a digital key of the third device.

2. The method according to claim 1, wherein the key creation request comprises second authentication information obtained by the second device from the first device;
the key creation request is used for instructing the third device to generate the information to be authenticated according to the second authentication information and third authentication information of the third device.

3. The method according to claim 2, wherein the second authentication information comprises first authentication information of at least one digital key obtained from the first device, and the first authentication information comprises an immobilizer token and/or a slot identifier, wherein the immobilizer token and the slot identifier are in one-to-one correspondence.

4. The method according to claim 3, wherein the second device determines a maximum number of digital keys for sharing based on a number of first authentication information comprised in the second authentication information.

5. The method according to claim 3, wherein the key creation request further comprises an immobilizer token allocated by the second device to the third device from the immobilizer token comprised in the first authentication information;
the second device adds the immobilizer token allocated to the third device to the key authentication information, so that the third device determines the digital key according to the immobilizer token;
wherein the second device has immobilizer tokens of different levels, and the immobilizer tokens of the second device are allocated by the first device.

6. The method according to claim 5, wherein the level of the immobilizer token is used to determine whether a device that owns the immobilizer token has the function of sharing the immobilizer token with another device again;
the immobilizer tokens of different levels comprise:
a first-level immobilizer token and at least one second-level immobilizer token, wherein the first-level immobilizer token is for use by the second device and the second-level immobilizer token is used for the second device to allocate the second-level immobilizer token to the third device; or,
at least one first-level immobilizer token and at least one second-level immobilizer token, wherein one first-level immobilizer token corresponds to one second-level immobilizer token, different first-level immobilizer tokens correspond to different second-level immobilizer tokens, the first-level immobilizer token is for use by the second device, and the second-level immobilizer token is used for the second device to allocate the second-level immobilizer token to the third device.

7. The method according to claim 6, wherein:
based on that the second device allocates a second-level immobilizer token to the third device, another second device cannot allocate the second-level immobilizer token to another third device again.

8. The method according to claim 5, wherein:
based on that the second device only has one level of immobilizer token, the second device cannot allocates its own immobilizer token to the third device.

9. The method according to claim 5, wherein:
different levels of immobilizer tokens comprised in the second device are stored in different fields, wherein the different fields comprise a first field and a second field;
the second device determines the immobilizer token allocated to the third device from the immobilizer token stored in the second field.

10. The method according to any one of claims 1 to 9, wherein the key creation request further comprises a password parameter, and the password parameter is used by the third device to generate a sharing password;
the key signing request further comprises the sharing password, so that the second device authenticates the sharing password of the third device;
based on that the authentication is successful and the key authentication information is generated after authenticating the information to be authenticated in the key signing request, the key import request is sent to the third device.

11. The method according to any one of claims 1 to 9, wherein the key creation request comprises permission configuration information of the digital key of the third device, the permission configuration information is used to indicate a control scope of the digital key on a vehicle in terms of time and/or space, and the lower a permission level in the permission configuration information, the smaller the control scope of the digital key on the vehicle;
wherein the digital key of the third device has a lower permission level than a digital key of the second device, and the digital key of the second device has a lower permission level than a digital key of the first device.

12. The method according to claim 11, further comprising:
based on that the permission level of the digital key of the second device is the lowest level, the second device does not have permission to share the digital key with the third device.

13. The method according to claim 11, wherein:
the permission configuration information of the digital key of the third device is determined based on a vehicle usage scenario;
wherein different vehicle usage scenarios correspond to different permission configuration information, and different permission configuration information is for different controls on the vehicle.

14. The method according to claim 11, wherein the permission configuration information comprises any one or more of:
a speed of the vehicle;
a driving range of the vehicle;
a driving trajectory of the vehicle;
a sharing duration of the digital key, which indicates a duration during which the digital key of the third device is valid for use by the third device;
control permission of the digital key on the vehicle;
a recovery condition of the digital key, which indicates a condition for determining that the digital key is invalid.

15. The method according to claim 14, wherein
based on that the vehicle usage scenario is a valet parking scenario, the permission configuration information comprises that: the driving speed of the vehicle is less than a first speed threshold and/or a range threshold; when the vehicle enters a parking space and parks for more than a first time threshold, a driving function of the vehicle is turned off; when the vehicle enters a parking space and parks for more than a second time threshold, the digital key is recovered, wherein the second time threshold is greater than the first time threshold; or,
based on that the vehicle usage scenario is a maintenance scenario, the permission configuration information comprises that: the sharing duration of the digital key is less than a time threshold, and when the sharing duration is greater than or equal to the time threshold, the digital key is recovered; or,
based on that the vehicle usage scenario is a vehicle wash scenario, the permission configuration information comprises that: when the driving speed of the vehicle is less than a second speed threshold, a display screen of the vehicle is turned off; when the driving speed of the vehicle is greater than or equal to the second speed threshold, the digital key is recovered; or,
based on that the vehicle usage scenario is a refueling scenario, the permission configuration information comprises that: when the driving speed of the vehicle is less than a third speed threshold, the vehicle is turned off and a refueling port or charging port is opened; when the driving speed of the vehicle is greater than or equal to the third speed threshold, the digital key is recovered; or,
based on that the vehicle usage scenario is a valet vehicle pickup or return scenario, the permission configuration information comprises that: a degree to which the driving trajectory of the vehicle deviates from a preset trajectory is less than a trajectory threshold, and when the degree to which the driving trajectory of the vehicle deviates from the preset trajectory is greater than or equal to the trajectory threshold, the digital key is recovered; or,
based on that the vehicle usage scenario is a valet item pickup or put down scenario, the permission configuration information comprises that: the digital key only has a permission to open a door or trunk of the vehicle; when the door or trunk is opened and closed once, or when an item is detected to be taken away from the vehicle or placed in the vehicle, the digital key is recovered.

16. The method according to any one of claims 1 to 9 and 12 to 15, wherein the key signing request sent by the third device further includes trust endorsement information, the trust endorsement information is used to provide the third device with a valid basis for using the digital key;
the second device and/or the first device confirms the trust endorsement information, and determines whether the digital key of the third device is valid according to the confirmation result.

17. The method according to claim 16, wherein:
the second device confirms the trust endorsement information in the key signing request when generating the key import request; and/or,
during a process of registering the digital key of the third device with a vehicle server, the first device confirms the trust endorsement information in a key confirmation request sent by the vehicle server after receiving the key confirmation request.

18. The method according to claim 16, wherein the trust endorsement information comprises any one or more of:
contract information;
server authentication information obtained by authenticating a third authentication information of the third device through a trusted server;
pre-signed information of the first device.

19. The method according to any one of claims 1 to 9 and 12 to 15, wherein the digital key of the third device comprises first information of a digital key of the first device, second information of a digital key of the second device, and third information of the third device;
the first information is used to authenticate validity of the digital key of the first device, the second information is used to authenticate validity of the digital key of the second device, and the third information is used to authenticate validity of the digital key of the third device.

20. The method according to claim 19, wherein the first information and the second information are determined according to information carried in the key creation request;
the third information is determined according to the information carried in the key import request.

21. A method of digital key sharing, comprising:
receiving, by a third device, a key creation request sent by a second device; and generating, by the third device, information to be authenticated; wherein the second device has digital keys, and the digital keys of the second device are obtained from a first device sharing the digital keys with the second device;
sending, by the third device, a key signing request to the second device, wherein the key signing request comprises the information to be authenticated, and is used to instruct the second device to authenticate the information to be authenticated in the key signing request and generate key authentication information; wherein the key authentication information is used to determine a digital key of the third device;
receiving, by the third device, a key import request sent by the second device, and saving, by the third device, the key authentication information in the key import request.

22. A method of digital key sharing, comprising:
sending, by a second device, a key creation request to the third device; wherein the second device has digital keys, and the digital keys of the second device are obtained from a first device sharing the digital keys with the second device;
generating, by the third device, information to be authenticated according to the key creation request, and sending, by the third device, a key signing request to the second device, wherein the key signing request comprises the information to be authenticated;
authenticating, by the second device, the information to be authenticated in the key signing request, generating, by the second device, key authentication information, and sending, by the second device, a key import request to the third device, wherein the key import request comprises the key authentication information; and wherein the key authentication information is used to determine a digital key of the third device;
storing, by the third device, the key authentication information in the key import request.

23. A terminal, comprising a processor and a memory, wherein the memory is used to store a program executable by the processor, and the processor is used to read the program in the memory and execute steps of any one of the methods of claims 1 to 20.

24. A terminal, comprising a processor and a memory, wherein the memory is used to store a program executable by the processor, and the processor is used to read the program in the memory and execute steps of the method of claim 21.

25. A digital key sharing system, comprising a second device and a third device, wherein:
the second device is configured to send a key creation request to the third device; wherein the second device has digital keys, and the digital keys of the second device are obtained from a first device sharing the digital keys with the second device;
the third device is configured to generate information to be authenticated according to the key creation request, and send a key signing request to the second device, wherein the key signing request comprises the information to be authenticated;
the second device is configured to authenticate the information to be authenticated in the key signing request, generate key authentication information, and sends a key import request to the third device, wherein the key import request comprises the key authentication information; and wherein the key authentication information is used to determine a digital key of the third device;
the third device is configured to store the key authentication information in the key import request.

26. A computer storage medium having a computer program stored thereon, wherein the program, when executed by a processor, implements steps of any one of the methods of claims 1 to 22.
